# EUROPÄISCHE PATENTSCHRIFT

(11) **EP 0 778 643 B1**
(45) Veröffentlichungstag und Bekanntmachung des Hinweises auf die Patenterteilung: **04.10.2001**
(21) Anmeldenummer: 96118811.7
(22) Anmeldetag: 22.11.1996
(51) Int. Cl.: H02G 15/013

(54) **Kabelmuffe mit Dichtungsteilen aus hintereinander liegenden Lamellen**
Cable sleeve with sealing portions comprising lamellae disposed one behind the other
Manchon de câble à parties d'étanchéité comprenant des lamelles disposée l'une derrière l'autre

(30) Priorität: 05.12.1995 DE 19545509
(43) Veröffentlichungstag der Anmeldung: 11.06.1997
(73) Patentinhaber: RXS Gesellschaft für Vermögensverwaltung mbH, 80333 München (DE)
(72) Erfinder: Meltsch, Hans-Jürgen, Dipl.-Ing., 58239 Schwerte (DE); Winterhoff, Hans, Dipl.-Ing., 79761 Waldshut-Tiengen (DE)
(74) Vertreter: Viering, Hans-Martin, Dipl.-Ing.

(56) Entgegenhaltungen:
- EP-A- 0 002 789
- EP-A- 0 219 072
- WO-A-81/01487
- WO-A-92/05609
- FR-A- 2 307 353
- FR-A- 2 596 215
- US-A- 4 390 744

## Beschreibung

Die Erfindung betrifft eine Kabelmuffe aus thermoplastischem Material, bestehend aus Muffenhalbschalen und stirnseitigen Dichtungsteilen aus in Achsrichtung hintereinander liegenden Lamellen, wobei Kabeleinführungsöffnungen in den Dichtungsteilen eingebracht und Dichtungseinsätze zwischen den Lamellen der Dichtungsteile eingestzt sind.

Aus der deutschen Patentschrift 25 15 939 ist eine Thermoplastklemmuffe mit Dichtungskörpern bekannt, die aus einem längsgeteilten Muffenrohr und Dichtkörpern mit den Kabeleinführungsöffnungen besteht. Die Muffenhalbschalen weisen zumindest an einem Ende einen fest angespritzten Dichtungskörperteil auf, der aus in Achsrichtung hintereinander liegenden Lamellen gebildet ist. Die Anpassung der Kabeleinführungsöffnungen an die einzuführenden Kabel erfolgt entweder durch Aufbohren der Einführungsbereiche oder durch Aufbringen von Dichtwickeln die in erforderlicher Stärke auf die einzuführenden Kabel aufgebracht werden.

Aus EP-A-0 002 789 ist ein Dichtungskörper zum Einführen von Kabelgarnituren bekannt. Die Einführungsbereiche bestehen aus hintereinanderliegenden Lamellen, die durch Ausschneiden von Einführungsöffnungen an die Durchmesser der Kabel angepaßt werden müssen. In den Zwischenräumen zwischen den Lamellen sind harte halbkreisähnliche Scheiben eingesetzt, durch die die Zwischenräume in Schlitze verkleinert werden. Dadurch erhöht sich die Auflagefläche für das bandförmige Dichtungsmaterial, das nun nicht mehr sehr tief in die Zwischenräume eingepreßt wird.

Aus WO 92/05609 ist ein Dichtungseinsatz mit hintereinander liegenden gefüllten Kammern bekannt, dessen Wandungen aus flexiblem Material bestehen. Dieser flexible Dichtungseinsatz

Aufgabe vorliegender Erfindung ist es, eine Dichtung zwischen einem Kabel und einem Körper, z.B, einer Halbschale oder einem Dichtkörper, herzustellen, bei der weder ein Aufbohren noch ein Aufdicken durch Dichtwickel erforderlich ist, die aber trotzdem die Vorteile von festen und anpassungsfähigen Elementen aufweist. Die gestellte Aufgabe wird mit einer Kabelmuffe der eingangs erläuterten Art dadurch gelöst, daß die Dichtungseinsätze aus verformbarem Material bestehen, in Lamellenform oder als Block ausgebildet sind, daß die Dichtungseinsätze mit ihren lamellenförmigen Teilen in die Hohlräume zwischen den Lamellen der Dichtungsteile eingetaucht sind und daß die Dichtungseinsätze über die Kontur der Kabeleinführungs öffnungen überstehen.

Der Körper aus Muffenhalbschalen oder Dichtkörperhälften bzw. die Dichtungsteile der erfindungsgemäßen Kabelmuffe bestehen aus einem harten, stabilen Material, wobei in den Dichtungsteilen eine oder mehrere vorgefertigte Halbbohrungen oder einzelne Durchbrüche eingebracht sind, die als Kabeleinführungen dienen. Diese Kabeleinführungsbereiche werden durch hintereinander liegende Lamellen gebildet und sind die tragenden Elemente der Dichtungsbereiche. Jeder dieser Dichtungsbereiche besteht aus mindestens zwei derartigen Lamellen. Diese Lamellen können als Bestandteil des Muffenkörpers integriert sein oder auch in einem separaten Dichtungskörper zusammengefaßt sein, der dann als Bauteil in die Halbschale bzw. den Dichtkörper dichtend eingesetzt wird. Das Grundprinzip für die Erfindung ist jedoch in jedem Fall gleich. Die Grundteile der Kabelmuffe bestehen beispielsweise aus Polypropylen (PP), Polyethylen (PE), Polyvinylchlorid (PVC) oder Polycarbonat (PC).

Dieser Körper kann für Muffen in der Form von Halbschalen, Dichtkörper bei Abzweig- und Verbindungsmuffen einschließlich Haubenmuffen eingesetzt werden.

Zur Dichtung der Kabeleinführungsbereiche wird nun eine geeignete plastische, plastisch-elastische oder elastische Masse zwischen die einzelnen Lamellen eingeführt, die bis zur Trennebene reicht bzw. kurz zuvor endet. Diese Masse kann ebenfalls in Lamellenform oder auch als Block ausgebildet und eingesetzt sein. Es ist auch möglich, daß die Lamellenhohlräume nicht vollends aufgefüllt werden, so daß beim Abdichten ein Raum zum Verquetschen des überschüssigen Dichtmaterials gegeben ist. Eine solche Ausbildung ist besonders dann vorteilhaft, wenn die Dichtungseinsätze in Blockform verwendet werden. Die Dichtungsmasse muß dabei so viel Rückstellkraft aufweisen, daß beim Einlegen des Kabels und anschließendem Verschließen der Kabelmuffe die Dichtungsmasse sich an das Kabel anlegt und gegenüber der Kabelmuffe abdichtet. Damit muß nun ein einzuführendes Kabel nicht mehr mit einem Dichtungswickel in der Größe der vorgegebenen Kabeleinführungsöffnung versehen werden. Nur in besonderen Spezialfällen ist die Bewicklung mit einem einfachen Wickel noch vonnöten. Als elastische Dichtungsmaterialien kommen besonders in Frage:
- Silikon (SI)
- Ethylen-Propylen-Terpolymer (EPDM)
- Nitrilkautschuk (NBR)

Bei der Verwendung von plastischen Dichtungsmaterialien können weiche, harte bzw. standfeste, an sich bekannte Dichtungsmaterialien für Kabelgarnituren, z.B. teilvernetzte Butylkautschukmischungen eingesetzt werden.

Die Konturen der Dichtungseinsätze in den Kabeleinführungsöffnungen können verschieden ausgebildet sein und müssen nicht den Einführungsöffnungen der Lamellen entsprechen. Durch geeignete Formgebung können jeweils die Verhältnisse an die Dichtungsforderungen angepaßt werden.

Die Erfindung wird nun anhand von neun Figuren näher erläutert.
- Figur 1: zeigt eine Muffenhalbschale mit Dichtungsteilen aus hintereinander liegenden Lamellen.
- Figur 2: zeigt Dichtungseinsätze zwischen den einzelnen Lamellen der Dichtungsbereiche.
- Figur 3: zeigt einen Dichtungsblock, der die Hohlräume zwischen den Lamellen voll ausfüllt.
- Figur 4: zeigt einen Dichtungsblock, der die Hohlräume der Lamellen nicht ausfüllt.
- Figur 5: zeigt Dichtungseinsätze, die über die Trennfläche überstehen.
- Figur 6: zeigt Dichtungseinsätze, die mit der Trennfläche abschließen.
- Figur 7: zeigt einen Dichtungseinsatz aus einer Kombination von elastischem und plastischem Dichtungsmaterial.
- Figur 8: verdeutlicht einige Konturen für die Dichtungseinsätze in den Kabeleinführungsöffnungen.
- Figur 9: zeigt die Einbettung von plastischem Dichtungsmaterial in einem Dichtungsblock aus elastischem Dichtungsmaterial.

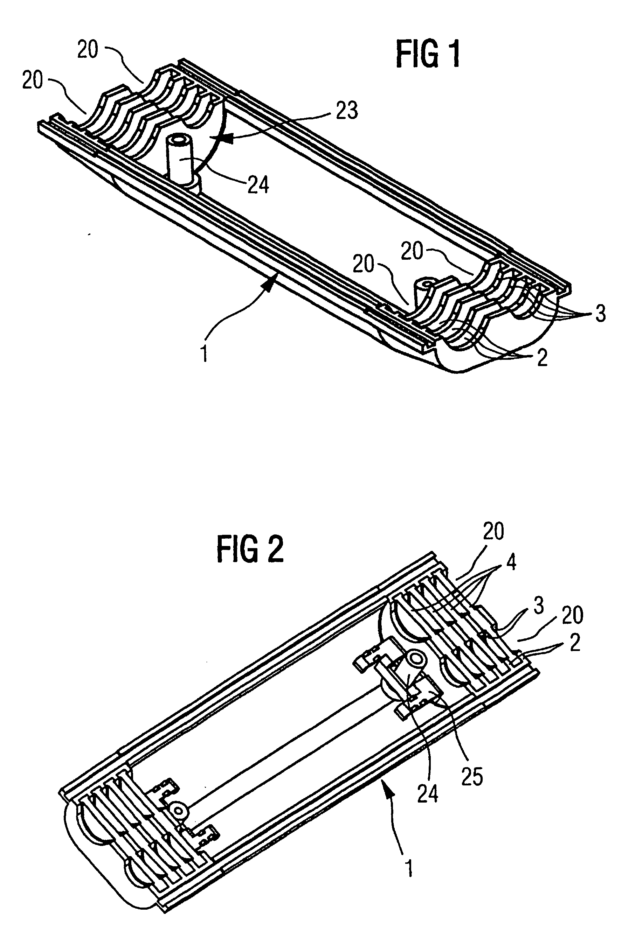

Die Figur 1 zeigt eine Muffenhalbschale 1 im Grundaufbau, in der Dichtungseinsätze gemäß der Erfindung eingesetzt werden können. Dabei wird hier angedeutet, daß die hintereinander liegenden Lamellen 3 mit den dazwischen liegenden Hohlräumen 2 die stirnseitigen Kabeleinführungen mit den Kabeleinführungsöffnungen 20 bilden. Diese Dichtungsbereiche können entweder fest mit der Halbschale 1 verbunden sein, wie es auf der rechten Seite dargestellt ist, oder auch als separate Dichtungskörper 23, wie es links dargestellt ist, ausgebildet sein. Im Mittelbereich der Halbschalen 1 sind Stützbolzen 24 für die Aufnahme von Verschlußschrauben angeordnet.

Figur 2 zeigt nun die Dichtungseinsätze 4, die gemäß der Erfindung in die Hohlräume 2 zwischen den Lamellen 3 eingefügt sind. Wie bereits erläutert, können diese aus elastischem, plastischem oder elastisch-plastischem Material bestehen. Diese Dichtungseinsätze 4 erstrecken sich hier über die gesamten Kabeleinführungsöffnungen 20 und werden bei Einlage eines Kabels zusammengepreßt, so daß sie sich dichtend an die eingeführten Kabel und die Lamellen 3 anfügen. Die einzuführenden Kabel müssen nun nicht mehr mit Dichtwickeln versehen werden und können innerhalb der Kabelmuffe mit Fixiervorrichtungen 25 zur Montageerleichterung festgelegt werden. Es ist jedoch auch vorgesehen, daß diese Fixiervorrichtungen 25 mit Klemmvorrichtungen versehen sind, so daß sie gleichzeitig Kabelabfangvorrichtungen bilden. Dadurch wird der Kabelmantel erfaßt, so daß Zug-, Druck- und Torsionskräfte abgefangen werden können.

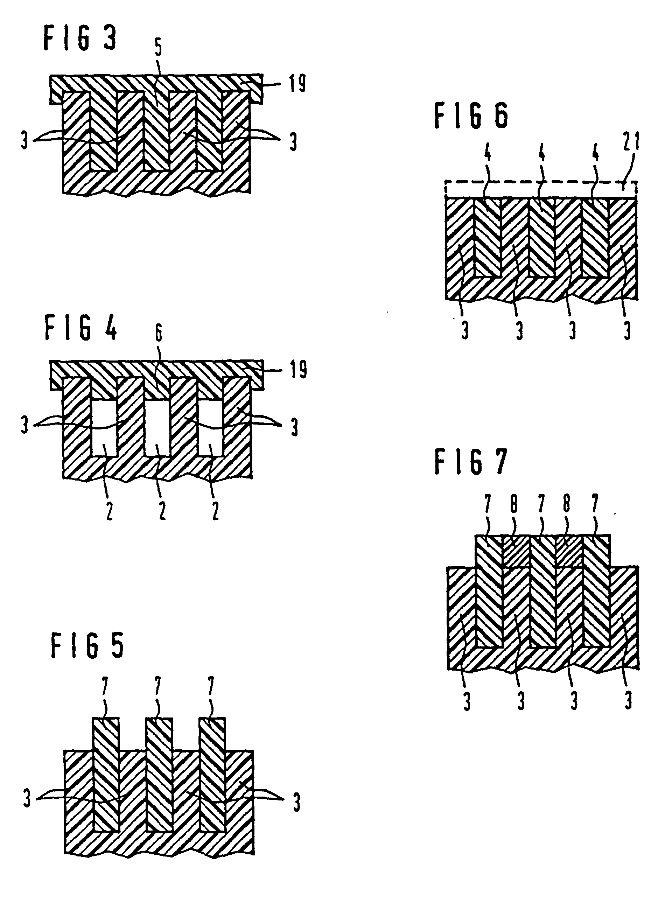

Figur 3 zeigt einen Dichtungseinsatz 5 als Dichtungsblock, der die Hohlräume zwischen den einzelnen Lamellen 3 völlig ausfüllt. Die einzelnen, in die Lamellen 3 eintauchenden Teile des Dichtungseinsatzes 5 sind durch eine bandförmige Einlage 19 aus gleichem Material zu einem Dichtungsblock miteinander verbunden, wobei die verbindende Einlage 19 über die äußeren Lamellen 3 des Dichtungsteiles hinweg- und seitlich herabgezogen ist, so daß eine Verlagerung in Achsrichtung nicht möglich ist.

Die Figur 4 zeigt ein ähnliches Beispiel wie Figur 3, wobei hier die Hohlräume 2 zwischen den einzelnen Lamellen 3 nicht voll ausgefüllt sind.

Figur 5 zeigt, daß die Dichtungseinsätze 7 in der Trennebene über die Kontur der Lamellen 3 hinausragen.

Figur 6 verdeutlicht, daß die Dichtungseinsätze 4 in der Trennebene mit den Lamellen 3 gleich hoch abschließen. Eine derartige Anordnung wird zweckmäßigerweise bevorzugt, wenn zusätzlich eine Abdichtung mit einem Dichtungswickel 21 vonnöten sein sollte, der dann über die gesamte Trennebene gelegt wird.

Figur 7 zeigt ein Ausführungsbeispiel, bei dem zwischen den einzelnen, über die Trennebene hinausragenden Dichtungseinsätzen 7 aus elastischem Dichtungsmaterial jeweils ein zu sätzlicher Dichtungseinsatz 8 aus plastischem Dichtungsmaterial eingefügt ist, so daß sich insgesamt ein zusammenhängender Dichtungsblock aus elastischem und plastischem Material ergibt.

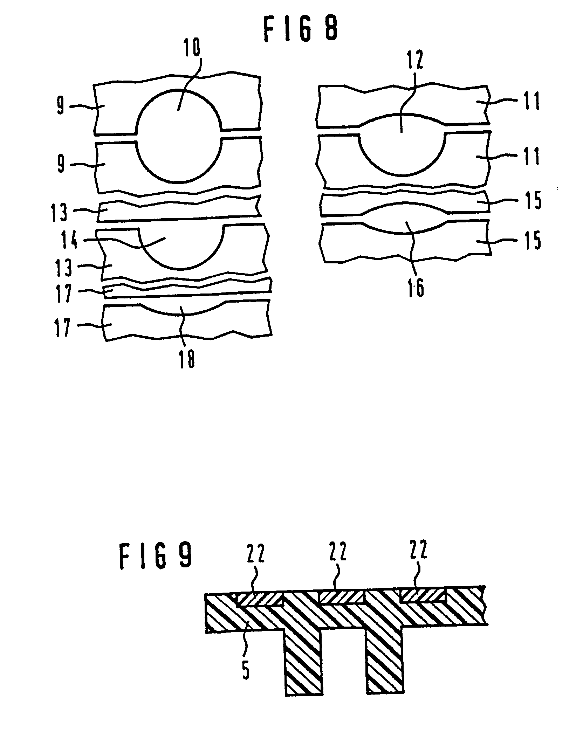

In Figur 8 werden zusammenfassend verschiedene Möglichkeiten für die Gestaltung der in der Trennebene der Kabelmuffe geteilten Dichtungseinsätze innerhalb der Kabeleinführungsöffnungen dargelegt. So ist eine kreisrunde Kontur 10 für einen Dichtungseinsatz 9 ebenso möglich, wie eine halbseitig kreisrunde und halbseitig schmale Kontur 12 eines Dichtungskörpers 11. Weiterhin wird gezeigt, daß bei einem Dichtungseinsatz 13 eine kreisrunde Kontur 14 mit einer geradlinig in der Trennebene verlaufenden Kontur kombiniert werden kann. Auch zwei gleiche ovale Konturen 16 sind wählbar, wie beim Dichtungseinsatz 15 ersichtlich ist. Schließlich ist als weiteres Beispiel angegeben, daß auch eine ovale und eine geradlinig-verlaufende Kontur 18 bei dem Dichtungseinsatz 17 genommen werden kann.

In Figur 9 wird schließlich noch aufgezeigt, daß verschiedene Dichtungsmaterialien eingebettet werden können. So sind hier zum Beispiel mehrere Streifen 22 aus plastischem Dichtungsmaterial in der Trennebene eines Dichtungsblockes 5 eingebettet. Auf diese Weise wird die Dichtwirkung zusätzlich verbessert, da eine besonders gute Haftwirkung zwischen dem plastischen Material und den eingeführten Kabeln zustande kommt.

## Patentansprüche

1. Kabelmuffe aus thermoplastischem Material, bestehend aus Muffenhalbschalen und stirnseitigen Dichtungsteilen aus in Achsrichtung hintereinander liegenden Lamellen, wobei Kabeleinführungsöffnungen in den Dichtungsteilen eingebracht und Dichtungseinsätze seinsätze zwischen den Lamellen der Dichtungsteile eingesetzt sind,
**dadurch gekennzeichnet,**
**daß** die Dichtungseinsätze (4, 5, 6, 7) aus verformbarem Material bestehen, in Lamellenform oder als Block ausgebildet sind, daß die Dichtungseinsätze (4,5,6,7) mit ihren lamellenförmigen Teilen in die Hohlräume (2) zwischen den Lamellen (3) der Dichtungsteile eingetaucht sind und daß die Dichtungseinsätze (4,5,6,7) über die Kontur der Kabeleinführungsöffnungen (20) überstehen.

2. Kabelmuffe nach Anspruch 1,
**dadurch gekennzeichnet,**
**daß** die Dichtungseinsätze (4, 5, 6, 7) aus elastischem Material bestehen.

3. Kabelmuffe nach Anspruch 2,
**dadurch gekennzeichnet, daß** die Dichtungseinsätze (4, 5, 6, 7) aus Silikon bestehen.

4. Kabelmuffe nach Anspruch 2,
**dadurch gekennzeichnet,**
**daß** die Dichtungseinsätze (4, 5, 6, 7) aus Ethylen-Propylen-Terpolymer (EPDM) bestehen.

5. Kabelmuffe nach Anspruch 2,
**dadurch gekennzeichnet,**
**daß** die Dichtungseinsätze (4, 5, 6, 7) aus Nitrilkautschuk (NBR) bestehen.

6. Kabelmuffe nach Anspruch 1,
**dadurch gekennzeichnet,**
**daß** die Dichtungseinsätze (4, 5, 6, 7) aus plastischem Material bestehen.

7. Kabelmuffe nach Anspruch 6,
**dadurch gekennzeichnet,**
**daß** die Dichtungseinsätze (4, 5, 6, 7) aus einer Mischung am teilvernetztem Butylkautschuk, Ruß und Polyisobutylen bestehen.

8. Kabelmuffe nach Anspruch 1,
**dadurch gekennzeichnet,**
**daß** die Dichtungseinsätze (5-22, 7-8) aus einer Kombination von elastischem und plastischem Material bestehen.

9. Kabelmuffe nach einem der vorhergehenden Ansprüchen,
**dadurch gekennzeichnet,**
**daß** die Kontur der Dichtungseinsätze (9) in den Kabeleinführungsöffnungen (20) jeder Muffenhalbschale (1) kreisförmig (10) ist.

10. Kabelmuffe nach einem der Ansprüche 1-8,
**dadurch gekennzeichnet,**
**daß** die Kontur der Dichtungseinsätze (15) in den Kabeleinführungen (20) jeder Muffenhalbschale (1) oval (16) verläuft.

11. Kabelmuffe nach einem der Ansprüche 1-8,
**dadurch gekennzeichnet,**
**daß** die Kontur der Dichtungseinsätze (11) in den Kabeleinführungsöffnungen (20) der einen Muffenhalbschale kreisförmig und der anderen Muffenhalbschale oval (12) verläuft.

12. Kabelmuffe nach einem der Ansprüche 1-8,
**dadurch gekennzeichnet,**
**daß** die Kontur der Dichtungseinsätze (13) in den Kabeleinführungsöffnungen (20) der einen Muffenhalbschale gerade, der anderen Muffenhalbschale kreisförmig (14) verläuft.

13. Kabelmuffe nach einem der Ansprüche 1-8,
**dadurch gekennzeichnet,**
**daß** die Kontur der Dichtungseinsätze (17) in den Kabeleinführungsöffnungen (20) der einen Halbschale gerade und der anderen Halbschale oval (18) verläuft.

14. Kabelmuffe nach einem der Ansprüche 1 - 8,
**dadurch gekennzeichnet,**
**daß** die Dichtungseinsätze (4) mit der Kontur der Kabeleinführungsöffnungen (20) abschließen und daß zusätzliches Dichtungsmaterial (21) auf die Umfangsflächen der Kabeleinführungsöffnung (20) eingefügt ist.

15. Kabelmuffe nach einem der vorhergehenden Ansprüche,
**dadurch gekennzeichnet,**
**daß** die einzelnen Dichtungseinsätze (4, 5, 7) die Hohlräume (2) zwischen den einzelnen Lamellen (3) voll ausfüllen.

16. Kabelmuffe nach einem der Ansprüche 1 bis 14,
**dadurch gekennzeichnet,**
**daß** die einzelnen Dichtungseinsätze (6) die Hohlräume (2) zwischen den einzelnen Lamellen (3) nur teilweise ausfüllen.

17. Kabelmuffe nach einem der vorhergehenden Ansprüche,
**dadurch gekennzeichnet,**
**daß** die einzelnen, zwischen den Lamellen (3) eingefügten Dichtungseinsätze (5, 6) in den Trennflächen der Muffenhalbschale (1) und in den Flächen der Kabeleinführungsöffnungen (20) durch eine bandförmige Einlage (19) aus gleichem Material zu einem Dichtungsblock miteinander verbunden sind.

18. Kabelmuffe nach einem der Ansprüche 1 bis 16,
**dadurch gekennzeichnet,**
**daß** Einlagen (8) aus plastischem Material zwischen den einzelnen Dichtungseinsätzen (7) aus elastischem Material in den Trennflächen der Muffenhalbschale (1) und in den Flächen der Kabeleinführungsöffnungen (20) angeordnet sind.

19. Kabelmuffe nach einem der vorhergehenden Ansprüche,
**dadurch gekennzeichnet,**
**daß** eine Fixiervorrichtung (6) für die eingelegten Kabel im Innern der Kabelmuffenhalbschalen (1) angeordnet ist.

20. Kabelmuffe nach Anspruch 19,
**dadurch gekennzeichnet,**
**daß** die Fixiervorrichtung (6) gleichzeitig Klemmvorrichtungen zur Abfangung von auf die Kabel einwirkenden Zug-, Druck- und Torsionsbelastungen aufweisen.

21. Kabelmuffe nach einem der vorhergehenden Ansprüche,
**dadurch gekennzeichnet,**
**daß** in den Dichtungsflächen der Dichtungseinsätze (4, 5, 6, 7) aus elastischem Material Dichtungseinlagen (22) aus plastischem Material eingebettet sind.

22. Kabelmuffe nach einem der vorhergehenden Ansprüche,
**dadurch gekennzeichnet,**
**daß** die Lamellen (3) an den Stirnseiten der Kabelmuffe als feste Wandungen in den Muffenhalbschalen (1) integriert sind.

23. Kabelmuffe nach einem der Ansprüche 1 bis 21,
**dadurch gekennzeichnet,**
**daß** die Lamellen (3) zu einem separaten Dichtungskörper (23) zusammengefaßt sind und daß dieser Dichtungskörper (23) in der Muffenhalbschale (1) dicht fixiert ist.

## Claims

1. Cable sleeve of thermoplastic material, comprising sleeve shells and front-sided sealing portions consisting of lamellae disposed one behind the other in axial direction, wherein cable-entrance openings are provided in the sealing portions and sealing inserts are inserted between the lamellae of the sealing portions,
**characterized in that**
the sealing inserts (4, 5, 6, 7) are made of ductile material, formed in the shape of lamellae or as a block, that the sealing inserts (4, 5, 6, 7) are engaged with their lamellae-shaped portions in the hollows (2) between the lamellae (3) of the sealing portions and that the sealing inserts (4, 5, 6, 7) project beyond the outline of the cable-entrance openings (20).

2. Cable sleeve according to claim 1,
**characterized in that**
the sealing inserts (4, 5, 6, 7) are made of elastic material.

3. Cable sleeve according to claim 2,
**characterized in that**
the sealing inserts (4, 5, 6, 7) are made of silicon.

4. Cable sleeve according to claim 2,
**characterized in that**
the sealing inserts (4, 5, 6, 7) are made of ethylenepropylene-terpolymer (EPDM).

5. Cable sleeve according to claim 2,
**characterized in that**
the sealing inserts (4, 5, 6, 7) are made of nitrile rubber (NBR).

6. Cable sleeve according to claim 1,
**characterized in that**
the sealing inserts (4, 5, 6, 7) are made of plastic material.

7. Cable sleeve according to claim 6,
**characterized in that**
the sealing inserts (4, 5, 6, 7) are made of a mixture of partly crosslinked butyl rubber, soot and polyisobutylene.

8. Cable sleeve according to claim 1,
**characterized in that**
the sealing inserts (5-22, 7-8) are made of a combination of elastic and plastic material.

9. Cable sleeve according to any of the preceding claims,
**characterized in that**
the outline of the sealing inserts (9) in the cable-entrance openings (20) of each sleeve shell (1) is circular (10).

10. Cable sleeve according to any of claims 1-8,
**characterized in that**
the outline of the sealing inserts (15) in the cable-entrance openings (20) of each sleeve shell (1) is oval (16).

11. Cable sleeve according to any of claims 1-8,
**characterized in that**
the outline of the sealing inserts (11) in the cable-entrance openings (20) of the one sleeve shell is circular and of the other sleeve shell is oval (12).

12. Cable sleeve according to any of claims 1-8,
**characterized in that**
the outline of the sealing inserts (13) in the cable-entrance openings (20) of the one sleeve shell is straight, and of the other sleeve shell is circular (14).

13. Cable sleeve according to any of claims 1-8,
**characterized in that**
the outline of the sealing inserts (17) in the cable-entrance openings (20) of the one sleeve shell is straight, and of the other sleeve shell is oval (18).

14. Cable sleeve according to any of claims 1-8,
**characterized in that**
the sealing inserts (4) end with the outline of the cable-entrance openings (20) and that additional sealing material (21) is inserted on the circumferential surfaces of the cable-entrance opening (20).

15. Cable sleeve according to any of the preceding claims,
**characterized in that**
the individual sealing inserts (4, 5, 7) entirely fill the hollows (2) between the individual lamellae (3).

16. Cable sleeve according to any of claims 1 to 14,
**characterized in that**
the individual sealing inserts (6) only partially fill the hollows (2) between the individual lamellae (3).

17. Cable sleeve according to any of the preceding claims,
**characterized in that**
the individual sealing inserts (5, 6) inserted between the lamellae (3) are linked to each other, in the dividing surfaces of the sleeve shell (1) and in the surfaces of the cable-entrance openings (20), by a band-shaped inset (19) of the same material to form a sealing block.

18. Cable sleeve according to any of claims 1 to 16,
**characterized in that**
insets (8) of plastic material are arranged between the individual sealing inserts (7) of elastic material in the dividing surfaces of the sleeve shell (1) and in the surfaces of the cable-entrance openings (20).

19. Cable sleeve according to any of the preceding claims,
**characterized in that**
a fixing device (6) for the inserted cables is provided inside the cable sleeve shells (1).

20. Cable sleeve according to claim 19,
**characterized in that**
the fixing device (6) is simultaneously provided with clamping devices for intercepting the tension, pressure and torsional load working on the cables.

21. Cable sleeve according to any of the preceding claims,
**characterized in that**
sealing insets (22) of plastic material are embedded in the sealing surfaces of the sealing inserts (4, 5, 6, 7) of elastic material.

22. Cable sleeve according to any of the preceding claims,
**characterized in that**
the lamellae (3) at the front ends of the cable sleeve are integrated as solid walls in the sleeve shells (1).

23. Cable sleeve according to any of claims 1 to 21,
**characterized in that**
the lamellae (3) are combined to form a separate sealing body (23) and that this sealing body (23) is tightly fixed in the sleeve shell (1).

## Revendications

1. Manchon de câble en matériau thermoplastique, constitué de demi-coques du manchon et de parties d'étanchéité frontales formées de lamelles disposées les unes derrière les autres dans la direction axiale, des ouvertures d'introduction de câble étant ménagées dans les parties d'étanchéité et des garnitures d'étanchéité étant insérées entre les lamelles des parties d'étanchéité, **caractérisé en ce que** les garnitures d'étanchéité (4, 5, 6, 7) sont constituées d'un matériau déformable et se présentent sous la forme de lamelles ou de bloc, **en ce que** les garnitures d'étanchéité (4, 5, 6, 7) sont enfoncées par leurs parties en forme de lamelles dans les espaces creux (2) entre les lamelles (3) des parties d'étanchéité et **en ce que** les garnitures d'étanchéité (4, 5, 6, 7) dépassent du contour des ouvertures d'introduction de câble (20).

2. Manchon de câble selon la revendication 1, **caractérisé en ce que** les garnitures d'étanchéité (4, 5, 6, 7) sont constituées d'un matériau élastique.

3. Manchon de câble selon la revendication 2, **caractérisé en ce que** les garnitures d'étanchéité (4, 5, 6, 7) sont constituées de silicone.

4. Manchon de câble selon la revendication 2, **caractérisé en ce que** les garnitures d'étanchéité (4, 5, 6, 7) sont constituées d'un terpolymère d'éthylène-propylène (EPDM).

5. Manchon de câble selon la revendication 2, **caractérisé en ce que** les garnitures d'étanchéité (4, 5, 6, 7) sont constituées de caoutchouc au nitrile (NBR).

6. Manchon de câble selon la revendication 1, **caractérisé en ce que** les garnitures d'étanchéité (4, 5, 6, 7) sont constituées d'un matériau plastique.

7. Manchon de câble selon la revendication 6, **caractérisé en ce que** les garnitures d'étanchéité (4, 5, 6, 7) sont constituées d'un mélange de caoutchouc butyle partiellement réticulé, de suie et de polyisobutylène.

8. Manchon de câble selon la revendication 1, **caractérisé en ce que** les garnitures d'étanchéité (5-22, 7-8) sont constituées d'une combinaison d'un matériau élastique et d'un matériau plastique.

9. Manchon de câble selon l'une quelconque des revendications précédentes, **caractérisé en ce que** le contour des garnitures d'étanchéité (9) dans les ouvertures d'introduction de câble (20) de chaque demi-coque (1) du manchon a une forme circulaire (10).

10. Manchon de câble selon l'une quelconque des revendications 1 à 8, **caractérisé en ce que** le contour des garnitures d'étanchéité (15) dans les ouvertures d'introduction de câble (20) de chaque demi-coque (1) du manchon a une forme ovale (16).

11. Manchon de câble selon l'une quelconque des revendications 1 à 8, **caractérisé en ce que** le contour des garnitures d'étanchéité (11) dans les ouvertures d'introduction de câble (20) de la première demi-coque du manchon est circulaire tandis que celui de l'autre demi-coque du manchon est ovale (12).

12. Manchon de câble selon l'une quelconque des revendications 1 à 8, **caractérisé en ce que** le contour des garnitures d'étanchéité (13) dans les ouvertures d'introduction de câble (20) de la première demi-coque du manchon est rectiligne tandis que celui de l'autre demi-coque du manchon est circulaire (14).

13. Manchon de câble selon l'une quelconque des revendications 1 à 8, **caractérisé en ce que** le contour des garnitures d'étanchéité (17) dans les ouvertures d'introduction de câble (20) de la première demi-coque est rectiligne tandis que celui de l'autre demi-coque est ovale (18).

14. Manchon de câble selon l'une quelconque des revendications 1 à 8, **caractérisé en ce que** les garnitures d'étanchéité (4) affleurent sur le contour des ouvertures d'introduction de câble (20) et **en ce qu'**un-matériau d'étanchéité supplémentaire est inséré sur les surfaces périphériques des ouvertures d'introduction de câble.

15. Manchon de câble selon l'une quelconque des revendications précédentes, **caractérisé en ce que** les garnitures d'étanchéité individuelles (4, 5, 7) remplissent complètement les espaces creux (2) entre les lamelles individuelles (3).

16. Manchon de câble selon l'une quelconque des revendications 1 à 14, **caractérisé en ce que** les garnitures d'étanchéité individuelles (6) des espaces creux (2) ne remplissent que partiellement les espaces creux (2) entre les lamelles individuelles (3).

17. Manchon de câble selon l'une quelconque des revendications précédentes, **caractérisé en ce que** les garnitures d'étanchéité individuelles (5, 6) insérées entre les lamelles (3) dans les surfaces de séparation de la demi-coque (1) du manchon et dans les surfaces des ouvertures d'introduction de câble (20) sont reliées l'une à l'autre par une pièce intercalaire (19) en forme de bande en matériau identique pour former un bloc d'étanchéité.

18. Manchon de câble selon l'une quelconque des revendications 1 à 16, **caractérisé en ce que** des pièces intercalaires (8) en matériau plastique sont agencées entre les garnitures d'étanchéité individuelles (7) en matériau élastique dans les surfaces de séparation de la demi-coque (1) du manchon et dans les surfaces des ouvertures d'introduction de câble (20).

19. Manchon de câble selon l'une quelconque des revendications précédentes, **caractérisé en ce qu'**un dispositif de fixation (6) pour les câbles introduits est agencé dans la partie intérieure des demi-coques (1) du manchon de câble.

20. Manchon de câble selon la revendication 19, **caractérisé en ce que** le dispositif de fixation (6) présente simultanément des dispositifs de serrage pour intercepter des sollicitations à la traction, à la compression et à la torsion intervenant sur le câble.

21. Manchon de câble selon l'une quelconque des revendications précédentes, **caractérisé en ce que** des pièces intercalaires d'étanchéité (22) en matériau plastique sont noyées dans les surfaces d'étanchéité des garnitures d'étanchéité (4, 5, 6, 7) en matériau élastique.

22. Manchon de câble selon l'une quelconque des revendications précédentes, **caractérisé en ce que** les lamelles (3) situées sur les côtés frontaux du manchon de câble sont intégrées sous forme de parois fixes dans les demi-coques (1) du manchon.

23. Manchon de câble selon l'une quelconque des revendications 1 à 21, **caractérisé en ce que** les lamelles (3) sont regroupées en un corps d'étanchéité séparé (23) et **en ce que** ce corps d'étanchéité (23) est fixé de manière étanche dans la demi-coque (1) du manchon.
